## Europäisches Patentamt
## European Patent Office
## Office européen des brevets

(19)

(11) Numéro de publication: **0 047 708**
**B1**

(12) # FASCICULE DE BREVET EUROPEEN

(45) Date de publication du fascicule du brevet:
**10.10.84**

(51) Int. Cl.³: **F 23 Q 2/16**

(21) Numéro de dépôt: **81420132.3**

(22) Date de dépôt: **01.09.81**

(54) **Briquet à gaz jetable.**

(30) Priorité: **05.09.80 FR 8019585**

(43) Date de publication de la demande:
**17.03.82 Bulletin 82/11**

(45) Mention de la délivrance du brevet:
**10.10.84 Bulletin 84/41**

(84) Etats contractants désignés:
**AT BE CH DE GB IT LI LU NL SE**

(56) Documents cités:
**CH - A - 452 964**
**FR - A - 2 313 638**
**FR - A - 2 397 599**
**FR - A - 2 417 723**
**US - A - 3 854 862**

(73) Titulaire: **FEUDOR S.A. Société Anonyme dite:,
195, avenue de Préssensé, F-69200 Venissieux (FR)**

(72) Inventeur: **Johansson, Stig, Johan Skyttes vag 18,
S-552 59 Jonköping (SE)**

(74) Mandataire: **Maureau, Pierre, Cabinet GERMAIN &
MAUREAU Le Britannia - Tour C 20, Boulevard E.
Déruelle, F-69003 Lyon (FR)**

BUNDESDRUCKEREI BERLIN

## Description

La présente invention concerne un briquet à gaz jetable du type connu par le brevet français n° 2 313 638, c'est-à-dire dont le filtre du détendeur est constitué par une membrane poreuse présentant une bonne mouillabilité aux hydrocarbures et dont les caractéristiques de perméabilité qui, correspondant au débit recherché en fonction de la hauteur de flamme désirée, sont déterminées à la fabrication, membrane tendue entre le rérservoir de combustible liquide et la chambre d'évaporation du briquet et à laquelle est associée au moins une nappe poreuse disposée sur sa face avale.

Ce détendeur permet d'obtenir un débit de gaz et, par conséquent, une hauteur de flamme constants et pratiquement indépendants de l'âge du briquet et de la température.

On connait aussi par le brevet français 2 417 723 une valve notamment pour briquet à gaz d'un type voisin de celui précité dans laquelle la membrane poreuse présente des pores dont le diamètre moyen est d'environ 1000 Å.

A l'exception du filtre détendeur, les briquets du type précité sont conçus selon la technique traditionnelle, c'est-à-dire qu'ils sont équipés d'une mèche ou d'un tube plongeur conduisant le combustible liquide jusqu'au détendeur. Pour que l'évaporation se produise d'une façon uniforme, il est nécessaire que les calories soient tranférées du brûleur aux parois de la chambre d'évaporation par une disposition spéciale telle que celle décrite dans le brevet français n° 2 313 639.

L'avantage essentiel d'un détendeur procurant une flamme fixe et de hauteur prédéterminée réside dans son faible prix de revient, ainsi que dans le fait qu'il n'est pas nécessaire de prévoir des moyens de réglage de la hauteur de flamme et qu'il peut être utilisé en toute sécurité.

Le but de la présente invention est de simplifier, et par conséquent, de réduire encore le prix de revient de ces briquets.

A cet effet, dans le briquet qu'elle concerne et qui est du type précité, d'une part, la membrane poreuse est une membrane mésoporeuse, c'est-à-dire dont les pores ont un rayon compris entre 20 et 500 Å et, d'autre part, la face amont de cette membrane communique directement avec l'intérieur du réservoir de combustible liquide.

Il a, en effet, été découvert que l'écoulement du combustible à travers une membrane mésoporeuse passe par l'intermédiaire d'un état condensé même si, en amont de la membrane le combustible se présente à l'état gazeux, car il se produit une condensation capillaire due à la pression saturée qui s'abaisse à une interface courbe. La mèche s'est donc avérée totalement superflue.

L'expérience a également démontré qu'en réalisant les éléments du détendeur en matériau mauvais conducteur de la chaleur, tel qu'en matière plastique, on réalisait un amortisseur thermique favorable à une meilleure stabilité de la flamme.

C'est pourquoi, suivant une autre caractéristique de l'invention, les pièces constitutives du détendeur entre lesquelles la membrane constituant le filtre est tendue, sont en matériau mauvais conducteur de la chaleur, tel qu'en matière plastique.

Cette disposition présente l'avantage de réduire encore le prix de revient de ce briquet.

Pour améliorer encore la stabilité de la flamme, suivant encore une autre caractéristique de l'invention, la matière plastique utilisée pour la constitution de la pièce d'appui du filtre est du type possédant une mauvaise mouillabilité au butane c'est-à-dire butanophobe, tandis que la membrane mésoporeuse est du type possèdant une bonne mouillabilité au butane ou butanophile.

Ainsi, on obtient l'assurance que le combustible se trouvant en amont et au contact de la membrane est toujours à l'état gazeux.

De préférence, la matière plastique constituant les pièces du détendeur est rendue butanophobe, par solvatisation de leur surface.

Par exemple, cette solvatisation est obtenue par oxydation avec du permanganate de potassium plus de l'acide sulfurique concentré. On diminue ainsi la tension superficielle des parois en matière plastique de la chambre située en amont de la membrane.

Suivant une variante de réalisation de l'invention, permettant d'empêcher le combustible à l'état liquide d'adhérer aux parois de la chambre située en amont de la membrane, celle-ci est conformée en tronc de cône avec sa petite base située du côté de la membrane.

Enfin, dans le cas où l'on ne peut pas éviter la présence de combustible à l'état liquide, au contact de la face amont de la membrane, ladite face de la membrane est métallisée.

On peut, par exemple, lui adjoindre une feuille d'aluminium poreuse.

Ainsi, la chaleur nécessaire à l'évaporation du combustible liquide est transmise par cette feuille d'aluminium.

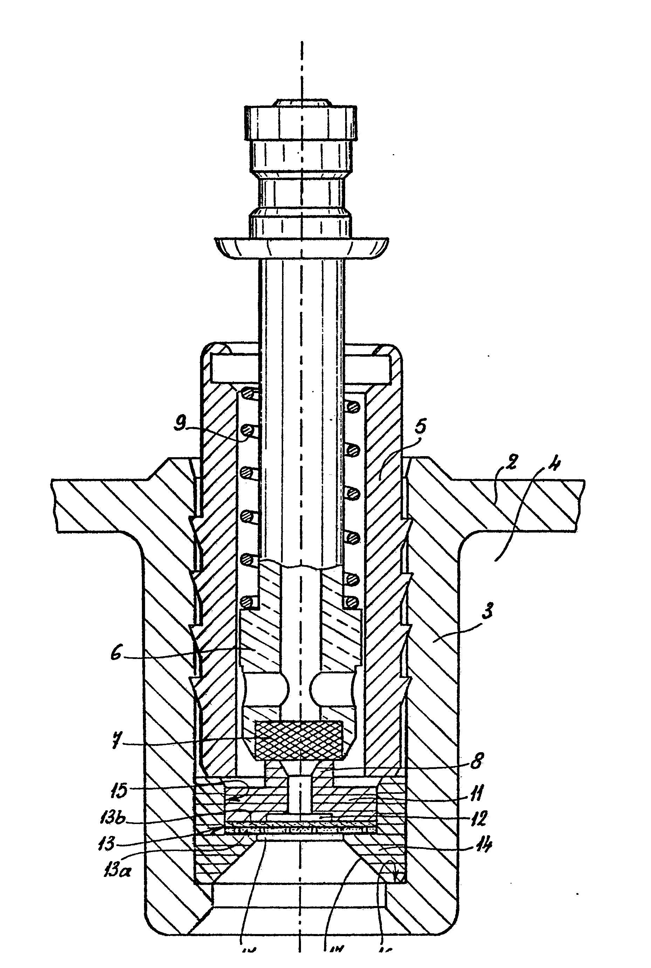

De toute façon, l'invention sera bien comprise à l'aide de la description qui suit en référence au dessin schématique annexé dont l'unique figure en est une vue partielle en coupe d'un briquet selon l'invention.

Dans cette figure, n'est représentée que la partie de la tête ou partie supérieure du corps (2) du briquet à gaz correspondant à l'emplacement de la valve.

Comme le montre le dessin, cette partie du corps (2) du briquet présente un puits cylindrique (3) faisint saillie à l'intérieur de l'enceinte (4) délimitée par le corps (2) et constituant le réservoir du combustible liquide du briquet. Ce puits cylindrique (3) est ouvert à ses deux extrémités et contient le corps (5) de la valve qui, dans cet exemple, lui est fixé par grippage, c'est-à-dire de la manière décrite dans le brevet français n°

2 313 638. A l'intérieur du corps tubulaire (5) de la valve est monté le brûleur soupape (6) équipé de son joint d'étanchéité (7) normalement maintenu et appliqué contre son siège (8) par un ressort (9). Le siège (8) est ménagé dans une pièce cylindrique (11) dont la face inférieure, c'est-à-dire celle opposée au siège (8), présente une cavité (12) faisant office de chambre d'évaporation. Le filtre détendeur (13) de cette valve est maintenu plaqué contre la face inférieure de la pièce (11) par une pièce d'appui (14) dont la face supérieure présente un évidement cylindrique (15) apte à loger la pièce (11) et dont la face inférieure prend appui sur un épaulement de retenue (16) prévu à cet effet à l'extrémité inférieure du puits (3) servant le logement à la valve.

Comme le montre encore le dessin, le bord périphérique du filtre détendeur (13) se trouve donc pincé entre la pièce (11) et le fond du logement (15) de la pièce d'appui (14).

Comme le montre aussi le dessin, ce filtre (13) est constitué par une membrane mésoporeuse (13a) à la face supérieure de laquelle est associée une nappe poreuse (13b). Cette membrane mésoporeuse dont les bords ont un rayon compris entre 20 et 500 Å, est avantageusement réalisée en une polyoléfine à orientation moléculaire et notamment en polypropylène ou polyéthylène.

En outre, comme cela ressort également du dessin, la membrane (13a) communique directement avec l'intérieur du réservoir (4) à travers le canal (17) ménagé dans l'axe de la pièce d'appui (14).

Comme indiqué précédemment, il a été en effet constaté que, même si le combustible se présente à l'état gazeux en amont du filtre (13), il se produit une condensation capillaire lors de son passage à travers les pores de la membrane mésoporeuse (13a), de telle sorte que la mèche habituellement utilisée avec ce type de briquet s'est avérée totalement inutile.

Il a été également constaté qu'il peut se produire, dans la membrane (13a) des transformations de phase, alors même que l'environnement est maintenu dans un état isothermique et qu'aucune chaleur n'est transmise à la membrane.

En conséquence, on peut obtenir un débit de gaz constant, c'est-à-dire une flamme très stable en utilisant, pour constituer les pièces essentielles de la valve et notamment la pièce (11) et la pièce d'appui (14) un matériau isothermique tel qu'une matière plastique dont le prix de revient est très inférieur à celui du laiton ou autre métal similaire.

Ainsi, cette disposition a permis de diminuer encore le prix de revient de ce type de valve dont un premier abaissement du prix est dû à l'absence de mèche.

Il a été indiqué précédemment que normalement le combustible se trouvant en amont du filtre (13) était à l'état gazeux. Pour que l'on puisse obtenir dans toutes les conditions d'utilisation du briquet une flamme stable, il faut évidemment prendre des mesures pour s'assurer qu'en amont du filtre (13) le combustible est toujours é l'état gazeux.

Suivant un premier de ces moyens, on utilise comme membrane mésoporeuse une membrane de type butanophile, ce qui est le cas des matières précitées, tandis que l'on utilise pour la réalisation de la pièce d'appui (14) une matière plastique butanophobe ou rendue butanophobe dans sa partie en contact direct avec le réservoir (4). Par exemple la paroi du canal (17) peut être rendue butanophobe par solvatisation, c'est-à-dire notamment par oxydation avec du permanganate de potassium plus de l'acide sulfurique concentré. On diminue ainsi la tension superficielle des parois en matière plastique de la chambre située en amont de la membrane, c'est-à-dire du canal (17).

Un autre moyen pouvant être utilisé en combinaison ou en remplacement de celui précité et permettant d'empêcher le combustible à l'état liquide d'adhérer aux parois du canal (17) consiste à donner à ce canal un profil tronconique tel qu'illustré en (17a) sur le dessin.

Ainsi, même si par suite d'un renversement du briquet, du combustible à l'état liquide est venu remplir le canal (17), la forme de celui-ci et/ou la butanophobie de ses parois empêcheront ce combustible à l'état liquide de rester dans ce canal lorsque le briquet sera redressé.

Dans le cas où, malgré l'utilisation des moyens précités et compte tenu de la nature du combustible utilisé, on ne serait pas certain d'obtenir l'élimination de toute présence de combustible à l'état liquide directement en amont du filtre (13), on peut encore prévoir, associée à la face inférieure ou amont de la membrane (13a), une feuille métallique obtenue par laminage ou métallisation. Ainsi, la chaleur nécessaire à l'évaporation du combustible liquide sur toute la surface utile de la membrane serait uniformément répartie grâce à la présence de cette feuille métallique ou de cette face métallisée de la membrane (13a).

**Revendications**

1. Briquet à gaz jetable du type dont le filtre détendeur (13) est constitué par une membrane poreuse (13a) présentant une bonne mouillabilité aux hydrocarbures et dont les caractéristiques de perméabilité qui correspondant au débit recherché en fonction de la hauteur de flamme désirée sont déterminées à la fabrication, membrane tendue entre le réservoir (4) de combustible liquide et la chambre d'évaporation (12) du briquet et à laquelle est associée au moins une nappe poreuse (13b) disposée sur sa face avale, caractérisé en ce que, d'une part, la membrane poreuse (13a) est une membrane mésoporeuse, c'est-à-dire dont les pores ont un rayon compris entre 20 et 500 Å et, d'autre part, la face amont de cette membrane communique directement avec l'intérieur du réservoir du combustible liquide.

2.Briquet selon la revendication 1, caractérisé en ce que les pièces constitutives du détendeur, c'est-à-dire le pièce (14) dans laquelle est ménagé le siège et celle servant d'appui au filtre détendeur (13) sont réalisées en matériau mauvais conducteur de la chaleur et notamment en matière plastique.

3. Briquet selon la revendication 1 et la revendication 2, caractérisé en ce que la matière plastique utilisée pour la constitution de la pièce d'appui (14) du filtre (13) est du type butanophobe, tandis que la membrane mésoporeuse (13a) est en matériau butanophile.

4. Briquet selon la revendication 3, caractérisé en ce que la partie de la pièce d'appui (14) du filtre détendeur en contact direct avec le combustible liquide est rendue butanophobe par solvatisation de sa surface tel que par oxydation avec du permanganate du potassium plus de l'acide sulfurique concentré.

5. Briquet selon l'une quelconque des revendications précédentes, caractérisé en ce que le canal (17) ou chambre ménagé dans la pièce d'appui du filtre détendeur, c'est-à-dire situé en amont dudit filtre et conformé en tronc de cône avec sa petite base située du côté de la membrane (13a).

6. Briquet selon l'une quelconque des revendications précédentes, caractérisé en ce que la face amont de la membrane (13a) du filtre détendeur (13) est métallisée par application d'une feuille métallique poreuse ou métallisée.

## Patentansprüche

1. Wegwerf-Gasfeuerzeug, bei welchem der Druckminder-Filter (13) durch eine poröse Membran (13a) mit guter Benetzbarkeit für Kohlenwasserstoffe gebildet wird, deren Permeabilitätseigenschaften, welche auf den in Abhängigkeit von der gewünschten Flammenhöhe erforderlichen Durchsatz abgestimmt sind, bei ihrer Herstellung festgelegt werden und wobei die Membran zwischen dem Tank (4) für den flüssigen Brennstoff und der Verdampfungskammer (12) des Feuerzeuges aufgespannt und mit wenigstens einem porösen Vlies (13b) auf ihrer stromabwärtigen Seite versehen ist, dadurch gekennzeichnet, daß die poröse Membran (13a) als halbporöse (mésoporeuse) Membran ausgebildet ist, deren Poren einen Radius zwischen 20 und 500 Å aufweisen, und daß die stromaufwärtige Seite der Membran (13a) direkt mit dem Inneren des Tanks für den flüssigen Brennstoff in Verbindung steht.

2. Wegwerf-Gasfeuerzeug nach Anspruch 1, dadurch gekennzeichnet, daß die den Druckminderer bildenden Teile, insbesondere das Haltestück (14), an welchem der als Auflager für den Druckminder-Filter (13) dienende Sitz ausgebildet ist, aus einem schlecht-wärmeleitenden Material, insbesondere einem Plastikmaterial bestehen.

3. Wegwerf-Gasfeuerzeug nach Anspruch 1 oder 2, dadurch gekennzeichnet, daß das für die Herstellung des Haltestückes (14) für den Filter (13) verwendete Plastikmaterial von einer butanabstoßenden (butanophobe) Art ist, während die halbporöse Membran (13a) aus einem butan-anziehenden (butanophile) Material besteht.

4. Wegwerf-Gasfeuerzeug nach Anspruch 3, dadurch gekennzeichnet, daß der mit dem flüssigen Brennstoff direkt in Berührung kommende Teil des Haltestückes (14) für den Druckminder-Filter (13) durch Solvatisierung seiner Oberfläche, z. B. durch Oxydation mit Kalium-Permanganat und konzentrierter Schwefelsäure, erfolgt.

5. Wegwerf-Gasfeuerzeug nach einem der vorstehenden Ansprüche, dadurch gekennzeichnet, daß der Kanal (17) bzw. die Kammer, welche in dem Haltestück (14) für den Druckminder-Filter (13) ausgebildet ist und welche stromaufwärts dieses Filters liegt, die Form eines Kegelstumpfes aufweist, dessen kleinere Grundseite der Membran (13a) zugewandt ist.

6. Wegwerf-Gasfeuerzeug nach einem der vorstehenden Ansprüche, dadurch gekennzeichnet, daß die stromaufwärtige Seite der Membran (13a) des Druckminder-Filters (13) durch Aufbringen einer porösen metallischen oder metallisierten Platte metallisch ausgebildet ist.

## Claims

1. A disposable gas lighter of the type whose pressure reducer filter (13) is formed by a porous membrane (13a) having good absorptivity with respect to hydrocarbons and whose permeability characteristics corresponding to the desired flow rate as a function of the desired height of the flame are determined at the time of manufacture, the membrane being stretched between the liquid fuel container (4) and the evaporation chamber (12) of the lighter and there being associated with the membrane at least one porous sheet (13b) disposed on the downstream face thereof, characterised in that, on the one hand, the porous membrane (13a) is a mesoporous membrane, i. e. its pores have a radius between 20 and 500 Å and, on the other hand, the upstream face of this membrane communicates directly with the interior of the liquid fuel container.

2. A lighter as claimed in claim 1, characterised in that the parts constituting the pressure reducer, i. e. the part (14) in which there is provided the seat and the part acting as a support for the pressure reducer filter (13), are made from a material which is a bad heat conductor and in particular of plastics material.

3. A lighter as claimed in claims 1 and 2, characterised in that the plastics material used for forming the support part (14) of the filter (13) is of the butanophobic type, whilst the mesoporous membrane (13a) is made of butanophilic material.

4. A lighter as claimed in claim 3, character-

ised in that the section of the support part (14) of the pressure reducer filter in direct contact with the liquid fuel is rendered butanophobic by silvation of its surface, such as by oxidation with potassium permanganate and concentrated sulphuric acid.

5. A lighter as claimed in any one of the preceding claims, characterised in that the duct (17) or chamber provided in the support part of the pressure reducer filter, i. e. located upstream of the said filter, is frustoconical, with its small base situated on the membrane (13a) side.

6. A lighter as claimed in any one of the preceding claims, characterised in that the upstream face of the membrane (13a) of the pressure reducer filter (13) is metallised by applying a porous or metallised metal sheet.